# EUROPÄISCHE PATENTANMELDUNG

(11) **EP 4 786 373 A1**
(43) Veröffentlichungstag der Anmeldung: **05.08.2026**
(21) Anmeldenummer: 25220494.6
(22) Anmeldetag: 03.12.2025
(51) Int. Cl.: B65G 1/04

(54) **HOCHDICHTES LAGER- UND KOMMISSIONIERSYSTEM AUS BLOCKLAGER UND ABGEHÄNGTEN BOTS**

(30) Priorität: 31.01.2025 DE 102025103686
(71) Anmelder: SSI Schäfer IT Solutions GmbH, 8114 Friesach (AT)
(72) Erfinder: Klug, Markus, 8111 Gratwein-Straßengel (AT)
(74) Vertreter: Witte, Weller & Partner Patentanwälte mbB

(57) **Zusammenfassung**

Es wird ein Lager- und Kommissioniersystem (10) offenbart zur hochdichten Lagerung und Bereitstellung von vertikal stapelbaren Lagerbehältern (36) gemäß Kommissionieraufträgen, wobei die Lagerbehälter (36) unterschiedliche Artikel beinhalten, das aufweist: ein Blocklager (14), in welchem eine Vielzahl der Lagerbehälter (36) in Form von Behälterstapeln (38) vertikal übereinander lagerbar sind; und ein Überkopf-Handhabungssystem (12), das ein abgehängtes Transport-Schienengitter (22) und eine Vielzahl (24) von Bots (26) umfasst, wobei die Bots (26) beweglich an das Transport-Schienengitter (22) gekoppelt sind; wobei das Transport-Schienengitter (22) das Blocklager (14) überlappt, so dass jeder der Behälterstapel (38) im Blocklager (14) mit jedem der Bots (26) erreichbar ist, und wobei das Transport-Schienengitter (22) frei schwebend über dem Blocklager (14) angeordnet ist.

## Beschreibung

Die vorliegende Offenbarung betrifft ein modernes Lagersystem, das z.B. in intralogistischen Distributionszentren (z.B. Einzelhandel), in der Produktionslogistik und/oder in der Lager- und/oder Kommissionierlogistik einsetzbar ist. Insbesondere betrifft die Offenbarung ein hochdichtes Lagersystem, und noch spezieller ein Würfellagersystem (CubeStorage-System).

High-Density-Lagersysteme (HDL-Systeme) sind eine spezielle Form von Lagerlösungen, die eingerichtet sind, eine maximale Raumausnutzung innerhalb eines Lagers zu ermöglichen. Sie werden regelmäßig in der Intralogistik eingesetzt. Merkmale von HDL-Systemen sind: eine hohe Raumausnutzung; reduzierte Zugriffszeiten; Anpassbarkeit an unterschiedliche Ladungsträger bzw. Ladehilfsmittel (z.B. Behälter, Kartons, Tablare, Paletten, etc.); sowie eine hohe Automatisierung. Bekannte Typen von HDL-Systemen sind: Durchfahrregale; Shuttle-(Regal-)Systeme, wie zum Beispiel "Cuby" oder "Flexi" von SSI Schäfer; automatisierte Lager- und Bereitstellungssysteme (ASRS) mit klassischen Regalbediengeräten, wie z.B. das "SSI Miniload"; Verschieberegale; sowie vertikale und/oder horizontale Umlaufregale (z.B. Paternoster, Karussell, etc.).

Die EP 3 909 894 A1 offenbart eine Kombination aus einem hochdichten Bodenlager, wo Lagerbehälter, die vertikal übereinander zu Stapeln geschichtet sind, regallos auf dem Boden gelagert sind, und aus einem auf einem Gebäudeboden positionierten Portalroboter, der das Bodenlager überragt und der die Behälterstapel und/oder einzelne Behälter von oben handhabt. Die vertikalen Stützsäulen des Portals schränken die (seitliche) Zugänglichkeit des Bodenlagers ein. Eine Anbindung des Bodenlagers und des Portalroboters an zuführende/abführende Förderer ist erschwert. Die Größe einer Lagerfläche des Bodenlagers, die vom Portal überlappt wird, d.h. eine Lagerkapazität, ist begrenzt, weil die in den Ecken des Portals vorgesehenen Stützsäulen nur eine endliche Traglast und Stabilität gewährleisten können. Dies bedeutet mit anderen Worten, dass die Fläche, innerhalb der ein Greifer des Portals bidirektional horizontal über die Behälterstapel hinweg bewegt werden kann, nicht beliebig groß skaliert werden kann, indem die horizontalen Träger des Portals beliebig lang gewählt werden. Außerdem kann immer nur ein einziger Greifer pro Portalroboter über die darunter gelagerten Behälterstapel bewegt werden, was den Durchsatz (d.h. eine Anzahl von Behälter-Handhabungen pro Zeiteinheit) stark beschränkt. Die Flexibilität ist eingeschränkt.

Ferner gibt es sogenannte Cubestorage-Systeme bzw. Würfellagersysteme (siehe z.B. WO 2022/ 228 894 A1), die spezielle HDL-Systeme sind und die sich durch eine extrem kompakte Raumausnutzung und eine innovative Lagerorganisation auszeichnen. Der Begriff des Würfellagersystems ist eng mit roboterbasierten Lagersystemen verbunden, bei denen Artikel (vorzugsweise in stapelbaren standardisierten Lagerbehältern mit gleicher Größe) in einem 3D-Raster (Würfelstruktur) gelagert und von Robotern bewegt werden. Bekannte Beispiele für diese Technologie sind die Systeme der Firmen Autostore und Ocado. Es gibt aber auch kleinere Systemanbieter wie die Firmen GridStore, Jungheinrich ("PowerCube") oder Cellgo.

Im Würfellagersystem werden die Artikel, meist sortenrein, in standardisierten und übereinander gestapelten Behältern (meist aus Kunststoff) gelagert. Eine oberste Ebene des Lagers dient als Arbeits- und Transportebene für die Roboter, die sich auf Schienen bewegen, die wiederum das "Dach" eines modularen Systemrahmens bilden, der aus Aluminium- oder Stahlprofilen gefertigt ist. Diese Rahmenkonstruktion definiert das 3D-Gitter, in welchem die Behälter direkt durch die bidirektional auf dem Dach verfahrbaren Roboter gestapelt werden. Der Rahmen trägt somit das Wegenetz der Roboter und muss ausreichend stabil sein. Auf den Rahmen kann nicht verzichtet werden.

Ferner sind AMR-Systeme bekannt, wobei AMR für "Autonomous Mobile Robots" steht. Diese Roboter bewegen sich frei auf dem Systemboden. Die Roboter können mobile Regale (z.B. im KIVA-System) direkt aufnehmen, transportieren und absetzen.

Schließlich sind deckenabgehängte Lagersysteme für Reinraum-Anwendungen (d.h. eine kontrollierte Umgebung mit minimaler Partikelbelastung) in der Halbleiterproduktion bekannt, siehe z.B. EP 4 276 040 A1. Dieses Lagersystem umfasst ein Zwischendeck-Lager zur Lagerung von Wafer-Stapeln in nicht stapelbaren Behältern. Das Zwischendeck-Lager ist an einer Reinraum- bzw. Gebäudedecke zusammen mit einem Bot-Fahrgitter aus Schienen für Handhabungs-Bots (Bot: Kurzform für "Robot") direkt über einem Bearbeitungsautomaten aufgehängt. Der Boden des Zwischendecks und das Fahrgitter werden gemeinsam durch vertikale Abhängstangen gehalten, wobei der Boden vertikal unterhalb des Gitters und oberhalb des Bearbeitungsautomaten angeordnet ist. In der Halbleiterindustrie ist eine extreme Reinheit notwendig, so dass ein Reinraumvolumen so klein wie möglich gewählt wird. Deshalb ist der Lagerboden für die Wafer-Behälter als Zwischendecke direkt im Reinraum und direkt über dem Bearbeitungsautomaten angeordnet. Die Lagerdichte ist wegen der Lagerung der Behälter in einer (einzigen) Ebene gering, was auch durch eine begrenzte Deckentraglast hervorgerufen wird. Das Lager, das Gitter und die Bots sind direkt miteinander verbunden und hängen gemeinsam an der Gebäudedecke. Die Behälter sind seitlich nicht zugänglich, weil die Abhängstangen einen freien Zugang blockieren. Die Flexibilität ist eingeschränkt.

Vielen bekannten gitterbasierten Systemen ist gemein, dass nur eine einzige Behältergröße gehandhabt werden kann. Die Größe (Grundfläche) der Behälter ist von einer Zellengröße des Gitters abhängig, und umgekehrt. Unterschiedlich dimensionierte Behälter werden üblicherweise nicht in einem gitterbasierten System gehandhabt. Auch dies mindert die Flexibilität.

Die DE 10 2017 222 801 A1 betrifft ein Produktionssystem mit einem durch eine Regallagerstruktur gebildeten Blocklager. Auf der gitterartig ausgebildeten Regalstruktur fahren Transportroboter. Eine obere horizontale Ebene der Regalstruktur geht nahtlos in ein sich daran anschließendes, außenliegendes Schienensystem über, das über Fertigungsrobotern angeordnet ist, die von den Transportrobotern versorgt werden.

Die GB 2 611 006 A betrifft eine aufgeständerte Gitterstruktur, auf der Roboter fahren, um Behälter von Behälterstapeln abzuheben oder darauf abzusetzen.

Die US 2023/0416 994 A1 betrifft ein deckenabgehängtes Schienensystem für den automatisierten Transport von Wafern in einer Halbleiterfabrik. Dieses System umfasst modulare Trägerstrukturen, die an der Decke montiert werden. Die eigentlichen Fahrschienen für die Transportfahrzeuge werden an diesen Trägerstrukturen befestigt. Die Trägerstrukturen können signifikant breiter als die Fahrschienen ausgebildet werden. Dies ermöglicht es, die Position der Fahrschienen flexibel zu verändern, um das System an geänderte Maschinenlayouts in der Fabrik anzupassen, ohne die Hauptträgerstruktur von der Decke demontieren zu müssen.

Es ist daher eine Aufgabe der vorliegenden Offenbarung, ein Lager- und/oder Kommissioniersystem vorzusehen, das eine hohe Flexibilität ermöglicht, insbesondere ohne ein Regal zu verwenden und/oder beim Einsatz von unterschiedlichen Behältergrößen, wobei die hochdichte Lagerung beizubehalten ist.

Diese Aufgabe wird gelöst durch ein Lager- und/oder Kommissioniersystem zur (vollautomatisierten) hochdichten Lagerung und Bereitstellung von vertikal stapelbaren Lagerbehältern gemäß Kommissionieraufträgen, wobei die Lagerbehälter unterschiedliche Artikel beinhalten, das aufweist: ein Blocklager, in welchem eine Vielzahl der Lagerbehälter in Form von Behälterstapeln vertikal übereinander lagerbar sind; und ein Überkopf-Handhabungssystem, das ein abgehängtes Transport-Schienengitter und eine Vielzahl von Bots umfasst, wobei die Bots, insbesondere von unten, beweglich an das Schienengitter gekoppelt sind; wobei das Schienengitter das Blocklager überlappt, so dass jeder der Behälterstapel im Blocklager mit jedem der Bots erreichbar ist, und das Schienengitter frei schwebend (und insbesondere ohne direkte Verbindung zum Blocklager) über dem Blocklager angeordnet ist.

Im vorliegenden Lagersystem erfolgt der Transport der Güter getrennt von der Lagerung der Güter, womit eine höhere Flexibilität erreicht wird. So können zum Beispiel unterschiedlich große Behälter im (gleichen) Blocklager gelagert werden, weil die Behälter nicht mehr durch die Transportebene (Schienengitter) hindurch bewegt werden müssen, um vom Lagerbereich in den Transportbereich zu gelangen. Die Transportebene ist von der Lagerebene getrennt und nicht fest mit ihr verbunden.

Das frei schwebende Schienengitter vermeidet statische Einschränkungen durch das Blocklager, was eine Systemkonfiguration flexibler und erweiterbar macht.

Die Behälterstapel können im Blocklager relativ zueinander noch dichter gelagert werden, weil die vertikalen Stützsäulen des herkömmlichen Würfellagersystemrahmens eliminiert sind.

Durch den Verzicht auf die tragende Rahmenkonstruktion sind die gelagerten Behälterstapel nicht nur von oben für die Bots zugänglich, sondern auch von horizontal seitlich, zumindest an einer freien Außenseite eines jeweiligen Lagerblocks. Arbeitsplätze und zuführende/abführende Förderer können flexibler platziert werden, weil die vertikalen Stützsäulen nicht länger stören. Die Investitionskosten für die Rahmenkonstruktion können eingespart werden und Ressourcen werden geschont. Eine durch die Tragfähigkeit der Rahmenkonstruktion vorgegebene maximale Lagerhöhe ist unbeachtlich.

Dennoch ist es möglich, sollte ein Systembetreiber dies wünschen, (dünne) Trennwände zwischen den gelagerten Behälterstapeln anzuordnen. Die Trennwände haben keine tragende Funktion und können somit mit sehr dünnen Wandstärken ausgebildet werden, welche bspw. dem mechanischem Brandschutz dienen oder verschieden klimatische, insbesondere temperierte Zonen voneinander abgrenzen können.

Das System kann schneller und einfacher installiert werden. Das Handhabungssystem kann am Boden (vor-)montiert und anschließend unter der Gebäudedecke befestigt werden, so dass unmittelbar danach das (bodengestützte) Blocklager, das ohne Regale oder andere Tragkonstruktionen auskommt, in Betrieb genommen werden kann. Der Boden muss nicht vorbereitet oder weiter eingerichtet werden, um die gewünschte Lagerfunktion übernehmen zu können. Dennoch können Bodenplatten oder Ähnliches eingesetzt werden, insbesondere um die Lagerorte (z.B. mittels Formschluss) vorab und exakt festzulegen.

Vorzugsweise weist das Transport-Schienengitter eine Vielzahl von ersten Schienen, die sich in einer ersten Richtung erstrecken, und eine Vielzahl von zweiten Schienen auf, die sich in einer zweiten Richtung, vorzugsweise senkrecht zur ersten Richtung, erstrecken und die sich mit den ersten Schienen kreuzen, um (insbesondere gleichförmige) Zellen zu definieren, unter denen die Behälterstapel lagerbar sind, so dass die Bots (insbesondere von oben) auf den entsprechenden Behälterstapel zugreifen können.

Die Zellen sorgen für eine exakte Positionierung der Behälter (Präzision) und ermöglichen den Bots einen strukturierten und präzisen Zugriff auf die Behälter. Die Kreuzungspunkte erlauben es den Bots sich in zwei Achsen zu bewegen, was die Erreichbarkeit der Behälterstapel darunter erhöht. Dies stellt einen organisatorischen Vorteil dar.

Das Schienengitter ist durch die standardisierte Gitterstruktur modular erweiterbar (Skalierbarkeit).

Insbesondere wird das Blocklager auf einem Gebäudeboden oder einer Gebäude-Zwischenebene positioniert.

Die Gebäudedecke muss das Gewicht des Blocklagers nicht tragen. Die Gebäudedecke trägt allein das Handhabungssystem.

Das System kann in verschiedenen Gebäudestrukturen installiert werden, was vielseitige Einsatzmöglichkeiten bietet (Anpassungsfähigkeit).

Die Positionierung auf bestehenden Gebäudeböden oder Zwischendecken reduziert bauliche Anforderungen (einfache Integration). Die Inbetriebnahme des Blocklagers ist einfach und schnell.

Vorzugsweise wird das Überkopf-Handhabungssystem von einer Gebäudedecke abgehängt.

Da keine zusätzlichen Stützen im Lagerbereich vorhanden sind (Bodenfreiheit), ist der Zugang und die Reinigung erleichtert. Die Flexibilität bei der Anordnung wird erhöht. Eine unabhängige Lagerstruktur und freie Gestaltung des Blocklagers sind möglich.

Die Gebäudedecke selbst kann aber auf dem Boden abgestützt sein, wie z.B. wenn sie als Mezzanine ausgebildet ist. Dies bedeutet mit anderen Worten, dass das Gewicht des Handhabungssystems auch vom Boden getragen werden kann, obwohl es von der Decke abgehängt ist.

Insbesondere wird das Blocklager regallos betrieben.

Die Material- und Installationskosten werden verringert (Kosteneffizienz), da keine Regale vorhanden sind. Der verfügbare Raum kann vollständig für die Lagerung genutzt werden (maximale Lagerkapazität).

Vorzugsweise sind die Bots, zumindest bidirektional, horizontal entlang des Schienengitters, und insbesondere unabhängig voneinander, beweglich.

Die Bots können gleichzeitig arbeiten, was eine Effizienz steigert (parallele Arbeitsprozesse). Im Fall, dass ein Bot ausfällt, können andere Bots weiterhin arbeiten, wodurch die Systemzuverlässigkeit erhöht wird (Fehlertoleranz). Multidirektionale Bewegungen minimieren Wegzeiten (hohe Geschwindigkeit).

Insbesondere umfasst jeder der Bots ein Lastaufnahmemittel (LAM) zum Handhaben der Lagerbehälter und/oder von einzelnen der Artikel von vertikal oben.

Das LAM ermöglicht die Entnahme einzelner Artikel oder ganzer Behälter, was die Flexibilität in der Kommissionierung erhöht (direkter Zugriff). Das LAM ermöglicht eine sichere Handhabung empfindlicher Artikel (schonendes Handling).

Vorzugsweise wird das das Blocklager vollständig vom Schienengitter überlappt.

Jeder Behälter ist für jeden Bot zugänglich, wodurch Zugriffszeiten minimiert werden (maximale Abdeckung). Es gibt keine toten Bereiche im Lager, was die Effizienz steigert (optimierte Lagerauslastung).

Insbesondere werden die Behälterstapel aus Lagerbehältern mit unterschiedlich dimensionierten Grundflächen, insbesondere sortenrein, gebildet.

Die sortenreine Lagerung vereinfacht die Kommissionierung. Unterschiedliche Behältergrößen ermöglichen eine bessere Anpassung an die gelagerten Artikel und reduzieren leere Räume (optimale Raumausnutzung).

Vorzugsweise ist das Schienengitter höhenverstellbar eingerichtet.

Dies ermöglicht auch eine Skalierbarkeit in der Höhe. Eine Erhöhung der Flexibilität ist nicht nur durch eine Erhöhung der Anzahl der Bots möglich, sondern auch durch eine durch die Höhenveränderlichkeit des Schienengitters hervorgerufene Lagerraumgewinnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Ein oder mehrere Ausführungsbeispiele der vorliegenden Offenbarung sind in den Zeichnungen dargestellt und werden in der nachfolgenden Beschreibung näher erläutert. Es zeigen:
- Fig. 1: eine perspektivische Ansicht eines exemplarischen Lager- und Kommissioniersystems; und
- Fig. 2: ein Blockdiagramm eines allgemeinen Lager- und Kommissioniersystems.

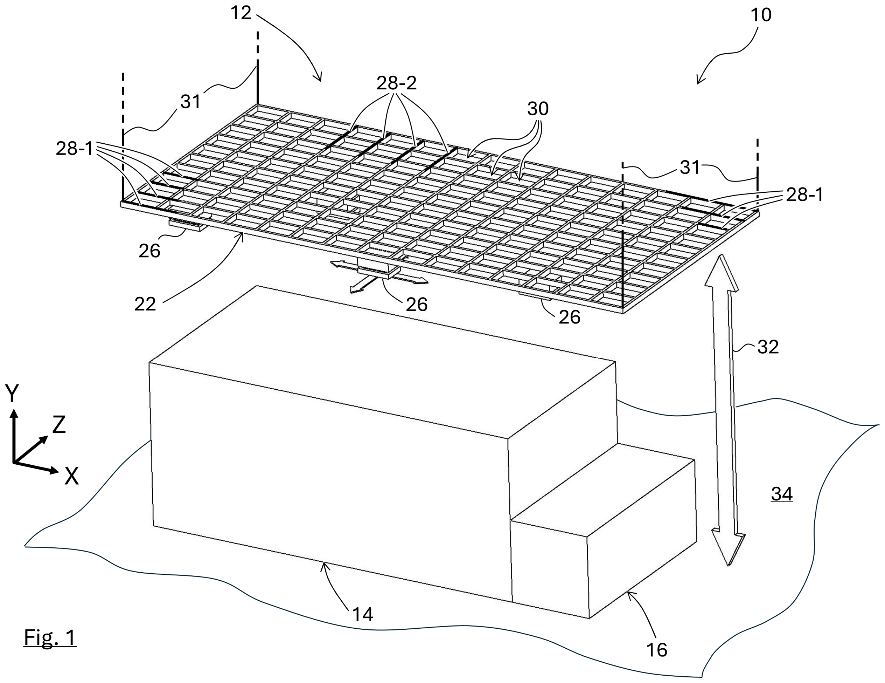

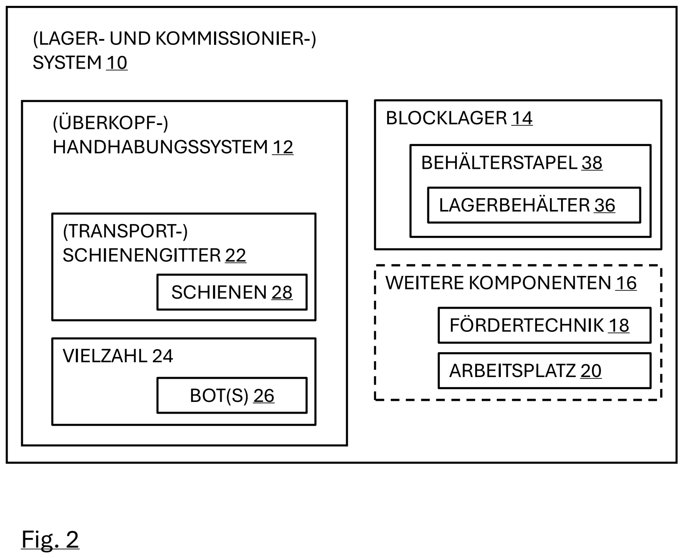

Fig. 1 zeigt eine perspektivische Ansicht eines schematisch dargestellten Lager- und/oder Kommissioniersystems 10, das nachfolgend auch kurz nur als System 10 bezeichnet werden wird. Fig. 2 zeigt ein allgemeines Blockdiagramm des Systems 10. Die nachfolgende Beschreibung erfolgt unter gleichzeitiger Bezugnahme auf die Fig. 1 und 2. Das System 10 kann in der Intralogistik (z.B. in der Distributionslogistik, in der Produktionslogistik, in der Lagerlogistik, etc.), insbesondere zum Kommissionieren, eingesetzt werden.

Das System 10 weist ein Überkopf-Handhabungssystem 12 und ein Blocklager 14 auf. Das Überkopf-Handhabungssystem 12 ist vertikal über dem Blocklager 14, und somit über Kopf, angeordnet. Das System 10 kann ferner ein oder mehrere weitere (System-)Komponenten 16 aufweisen, wie z.B. eine oder mehrere Förderer bzw. Fördertechniken (FT) 18 und/oder ein oder mehrere Arbeitsplätze (AP) 20.

Es versteht sich, dass das System 10 ferner auch weitere Komponenten 16 aufweisen kann, die für eine Kommissionierung erforderlich sind. Dabei handelt es sich insbesondere um einen Lagerverwaltungsrechner (LVR, nicht gezeigt) und einen Materialflussrechner (MFR, nicht gezeigt).

Das Überkopf-Handhabungssystem 12, das nachfolgend auch kurz nur als Handhabungssystem 12 bezeichnet werden wird, ist vertikal über dem Blocklager 14 angeordnet und überlappt das Blocklager 14, vorzugsweise vollständig. Dies bedeutet, dass das Handhabungssystem 12 das Blocklager 14 - im Fall einer Betrachtung von vertikal oben entlang der Y-Achse - vollständig umschließen kann.

Das Handhabungssystem 12 umfasst ein Transport-Schienengitter 22 und eine Vielzahl 24 von Bots 26. Das Handhabungssystem 12 kann ferner eine (nicht gezeigte) Bot-Steuerung umfassen, um die Bewegungen der Bots 26 zu koordinieren. Die Steuerung kann z.B. den Verkehr der Bots 26 regeln. Die Steuerung kann durch einen übergeordneten Flotten-Manager (nicht gezeigt) implementiert sein, wobei die Vielzahl 24 die Flotte darstellt. Die Steuerung erzeugt oder implementiert Transportaufträge, die von den Bots 26 auszuführen sind und die vom MFR vorgegeben werden. Auf die übergeordnete Bot-Steuerung kann verzichtet werden, wenn jeder der Bots 26 mit einer eigenen autonomen Steuerung (nicht gezeigt) versehen ist.

Das Schienengitter 22 kann aus einer Vielzahl von Schienen 28, vorzugsweise aus ersten Schienen 28-1, die sich vorzugsweise in einer ersten (Längs-)Richtung X erstrecken, und aus zweiten Schienen 28-2 gebildet werden, die sich in einer zweiten (Quer-)Richtung Z, insbesondere senkrecht zur ersten Richtung X, erstrecken können, um (vorzugsweise rechteckige, und insbesondere quadratische) Zellen 30 zu definieren. Die Schienen 28 können entlang eines (imaginären) entsprechenden Rasters ausgerichtet sein. Das Raster kann durch gleichförmige Zellen 30 gebildet werden, die auch durch mehr als zwei Richtungen definiert sind. Das Raster kann z.B. hexagonal sein. In der Fig. 1 ist exemplarisch ein gleichmäßiges rechteckiges Raster veranschaulicht, das entlang der Längsrichtung X und der Querrichtung Z des Systems 10 orientiert ist. Das Schienengitter 22 kann das Blocklager 14 vollständig überlappen. Das Schienengitter 22 kann über eine Vielzahl von Aufhängungsgliedem 31 an einer Raum- bzw. Gebäudedecke (nicht gezeigt) aufgehängt sein. In Fig. 1 ist das Schienengitter 22 von einer (nicht gezeigten) Decke abgehängt. Das Schienengitter 22 kann frei über dem Blocklager 14 schweben, so dass keine unmittelbare bzw. direkte Verbindung zwischen dem Schienengitter 22 und dem Blocklager 14 besteht. Eine Verbindung kommt nur vorübergehend zustande, während einer oder mehrere der Bots 26 (vertikal) mit dem Blocklager 14 interagieren (d.h. Lagergüter ein- oder auslagern, auch zu Kommissionierzwecken).

Jeder der Bots 26 kann ein automatisiertes, autonom arbeitendes Fahrzeug sein, das für einen Materialtransport, eine Kommissionierung und/oder andere (intra-)logistische Prozesse eingerichtet ist. Die Bots 26 sind, vorzugsweise von unten, an das Schienengitter 22 gekoppelt und können eingerichtet sein, unabhängig voneinander (horizontal) entlang des Schienengitters 22 (insbesondere zwangsgeführt) bewegt zu werden. Jeder der Bots 26 umfasst ein Lastaufnahmemittel (LAM), das zur Handhabung von Ladehilfsmitteln und/oder einzelnen Artikeln (von oben, vgl. Interaktionspfeil 32 in Fig. 1), die vorzugsweise sortenrein in den Ladehilfsmitteln gelagert werden, eingerichtet ist.

Das Blocklager 14 ist auf einer Fläche 34 positioniert, die durch einen Gebäudeboden, eine Bodenauflage, ein Zwischendeck bzw. eine Gebäude-Zwischenebene (Mezzanin) oder Ähnliches implementiert sein kann. Insbesondere weist das Blocklager 14 keine Stützstruktur auf, wie z.B. Regale oder die eingangs erwähnte Rahmenkonstruktion der Würfellagersysteme, die die Fahrzeuge trägt und die die Behälterstapel seitlich stützt. Dies bedeutet, dass das Blocklager 14 "regallos", d.h. ohne Regale und/oder andere Stützstrukturen, betrieben werden kann. Das Blocklager 14 ist eingerichtet, eine Vielzahl von Lagerbehältern 36 in Form von Behälterstapeln 38 aufzunehmen. Das Blocklager 14 repräsentiert allgemein eine Lagerform, der die Lagergüter ohne zusätzliche Regale direkt auf dem Boden gestapelt werden. Meist wird nach dem LIFO-Prinzip (Last in, First out) gearbeitet. Ein direkter Zugriff auf die Lagergüter ist von oben und seitlich von der (offenen) Seite möglich.

Die Lagerbehälter 36 sind eingerichtet, vertikal übereinander, und insbesondere ineinander, gestapelt zu werden, um die Behälterstapel 38 zu bilden. Die Stapel 38 stellen "Blöcke" des Blocklagers 14 dar, die dicht nebeneinander und übereinander stehen können. Die Lagergüter (Lagerbehälter 36 inklusive Artikel) können bis zu einer maximalen Stapelhöhe oder bis zur Tragfähigkeit der untersten Behälterebene/ des untersten Behälters aufeinander gestapelt werden. Vorzugsweise sind die Behälter 36 formschlüssig ineinander stapelbar. Insbesondere sind die Behälter 36 standardisiert, indem sie z.B. gleich dimensionierte Grundflächen, aber unterschiedlich hohe Seitenwände (nicht gezeigt) aufweisen. Die Standardisierung der Behälter 36 kann sich auch darin äußern, dass deren Grundflächen jeweils ein ganzzahliges Vielfaches einer kleinsten gemeinsamen Flächeneinheit darstellen oder dieser entsprechen.

Die Lagerbehälter 36 stellen eine mögliche Ausgestaltung der oben erwähnten Ladehilfsmittel dar. Die Lagerbehälter 36 können aus Kunststoff hergestellt sein. Es versteht sich, dass auch andere stapelbare Ladehilfsmittel anstatt der Behälter 36 eingesetzt werden können, wie z.B. Tablare, Gitterboxen oder Ähnliches.

Das Raster des Schienengitters 22 ist vorzugsweise kleiner dimensioniert als ein Raster des Bodenlagers 14. Auf diese Weise ist gewährleistet, dass unterschiedlich dimensionierte Lagerbehälter 36 als Stapel 38 mit maximaler Lagerdichte, d.h. mit minimalem seitlichen Abstand zueinander, im Blocklager 14 positionierbar sind.

Die Behälter 36 sind vorzugsweise sortenrein mit den Artikeln beladen. Dies bedeutet, dass in den Lagerbehältern 36 ausschließlich eine einzigartige Art bzw. Sorte bzw. ein einheitlicher Artikeltyp gelagert ist. Der Inhalt des entsprechenden Behälters 36 ist vollständig homogen. Es findet keine Durchmischung von verschiedenen Artikeln, Materialien oder Chargen statt.

### BEZUGSZEICHENLISTE:

- 10: (Lager- und Kommissionier-)System
- 12: Überkopf-Handhabungssystem
- 14: Blocklager
- 16: Lagerkomponenten
- 18: Fördertechnik (FT)
- 20: Arbeitsplatz (AP)
- 22: (Transport-)Schienengitter
- 24: Vielzahl von Bots
- 26: Bot
- 28: Schienen
- 30: Zelle
- 31: Aufhängungsglied
- 32: Interaktion
- 34: Fläche
- 36: (Lager-)Behälter
- 38: (Behälter-)Stapel

## Patentansprüche

1. Lager- und Kommissioniersystem (10) zur hochdichten Lagerung und Bereitstellung von vertikal stapelbaren Lagerbehältern (36) gemäß Kommissionieraufträgen, wobei die Lagerbehälter (36) unterschiedliche Artikel beinhalten, das aufweist:
ein Blocklager (14), in welchem eine Vielzahl der Lagerbehälter (36) in Form von Behälterstapeln (38) vertikal übereinander lagerbar sind; und
ein Überkopf-Handhabungssystem (12), das ein abgehängtes Transport-Schienengitter (22) und eine Vielzahl (24) von Bots (26) umfasst, wobei die Bots (26) von unten beweglich an das Transport-Schienengitter (22) gekoppelt sind;
wobei
das Transport-Schienengitter (22) das Blocklager (14) überlappt, so dass jeder der Behälterstapel (38) im Blocklager (14) mit jedem der Bots (26) erreichbar ist, und
das Transport-Schienengitter (22) frei schwebend über dem Blocklager (14) angeordnet ist.

2. Lager- und Kommissioniersystem (10) nach Anspruch 1, wobei das Transport-Schienengitter (22) eine Vielzahl von ersten Schienen (28-1), die sich in einer ersten Richtung (X) erstrecken, und eine Vielzahl von zweiten Schienen (28-2) aufweist, die sich in einer zweiten Richtung (Z), vorzugsweise senkrecht zur ersten Richtung (X), erstrecken und die sich mit den ersten Schienen (28-1) kreuzen, um Zellen (30) zu definieren, unter denen die Behälterstapel (38) lagerbar sind, so dass die Bots (26) auf den entsprechenden Behälterstapel (38) und/oder einen oder mehrere obere Lagerbehälter (36) zugreifen können.

3. Lager- und Kommissioniersystem (10) nach Anspruch 1 oder 2, wobei das Blocklager (14) auf einem Gebäudeboden oder einer Gebäude-Zwischenebene positioniert ist.

4. Lager- und Kommissioniersystem (10) nach einem der Ansprüche 1-3, wobei das Überkopf-Handhabungssystem (12) von einer Gebäudedecke abgehängt wird.

5. Lager- und Kommissioniersystem (10) nach einem der Ansprüche 1-4, wobei das Blocklager (14) regallos betrieben wird.

6. Lager- und Kommissioniersystem (10) nach einem der Ansprüche 1-5, wobei die Bots (26), zumindest bidirektional, horizontal entlang des Transport-Schienengitters (22), und insbesondere unabhängig voneinander, beweglich sind.

7. Lager- und Kommissioniersystem (10) nach einem der Ansprüche 1-6, wobei jeder der Bots (26) ein Lastaufnahmemittel zum Handhaben der Lagerbehälter (36) und/oder von einzelnen der Artikel von vertikal oben umfasst.

8. Lager- und Kommissioniersystem (10) nach einem der Ansprüche 1-7, wobei das Transport-Schienengitter (22) das Blocklager (14) vollständig überlappt.

9. Lager- und Kommissioniersystem (10) nach einem der Ansprüche 1-8, wobei die Behälterstapel (38) aus Lagerbehältern (36) mit unterschiedlich dimensionierten Grundflächen, vorzugsweise jeweils sortenrein, gebildet sind.

10. Lager- und Kommissioniersystem (10) nach einem der Ansprüche 1-9, wobei das Transport-Schienengitter (22) höhenverstellbar eingerichtet ist.
